(19) **Europäisches Patentamt European Patent Office Office européen des brevets**

(11) **EP 4 583 129 A1**

(12) **EUROPEAN PATENT APPLICATION**
published in accordance with Art. 153(4) EPC

(43) Date of publication:
09.07.2025 Bulletin 2025/28

(21) Application number: 23859993.0

(22) Date of filing: 09.08.2023

(51) International Patent Classification (IPC):
$H01F\ 1/24^{(2006.01)}$    $B22F\ 1/00^{(2022.01)}$
$B22F\ 1/16^{(2022.01)}$    $B22F\ 1/17^{(2022.01)}$
$B22F\ 3/00^{(2021.01)}$    $B22F\ 3/24^{(2006.01)}$
$C21D\ 6/00^{(2006.01)}$    $C22C\ 33/02^{(2006.01)}$
$C22C\ 38/00^{(2006.01)}$    $H01F\ 1/147^{(2006.01)}$
$H01F\ 1/33^{(2006.01)}$    $H01F\ 3/08^{(2006.01)}$
$H01F\ 27/255^{(2006.01)}$    $H02K\ 1/02^{(2006.01)}$

(52) Cooperative Patent Classification (CPC):
B22F 1/00; B22F 1/16; B22F 1/17; B22F 3/00;
B22F 3/24; C21D 6/00; C22C 33/02; C22C 38/00;
H01F 1/147; H01F 1/24; H01F 1/33; H01F 3/08;
H01F 27/255; H02K 1/02

(86) International application number:
PCT/JP2023/029024

(87) International publication number:
WO 2024/048226 (07.03.2024 Gazette 2024/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.08.2022 JP 2022137770
11.01.2023 JP 2023002295

(71) Applicant: Niterra Co., Ltd.
Nagoya-shi, Aichi 461-0005 (JP)

(72) Inventors:
• ITO, Yoichi
Nagoya-shi, Aichi 461-0005 (JP)
• SHIOTSU, Kenichi
Nagoya-shi, Aichi 461-0005 (JP)
• KOZUKA, Hisashi
Nagoya-shi, Aichi 461-0005 (JP)

(74) Representative: Grünecker Patent- und
Rechtsanwälte
PartG mbB
Leopoldstraße 4
80802 München (DE)

(54) **DUST CORE, ALLOY PARTICLE, ELECTRONIC ELEMENT, ELECTRONIC DEVICE, ELECTRIC MOTOR, AND DYNAMO**

(57) Provided is a dust core that sustains low eddy-current loss and that has high strength and high relative permeability. A dust core (1) contains a plurality of alloy particles (3) each including: a core portion (5) made of an alloy containing iron and silicon; and a coating portion (7) coating the core portion (5). The coating portion (7) contains $Fe_2SiO_4$ or a solid-solved body of $Fe_2SiO_4$ and $Mg_2SiO_4$. A plurality of metal particles (9) each containing silicon in a proportion lower than a proportion of the silicon contained in the alloy of the core portion (5) is arranged on an outer edge of the coating portion (7) in a scattered manner. At least one of the metal particles (9) is present in a state of being held between the coating portions (7) of adjacent ones of the alloy particles (3).

**(Cont. next page)**

EP 4 583 129 A1

# Fig. 2

**Description**

TECHNICAL FIELD

The present disclosure relates to a dust core, an alloy particle, an electronic element, an electronic device, an electric motor, and an electric generator.

BACKGROUND ART

A dust core disclosed in Patent Document 1 includes: soft magnetic particles containing Fe; and a coating layer coating each of the soft magnetic particles. A compound layer included in the coating layer is formed by reacting a silicone resin and a ferrite.

Regarding a soft magnetic body disclosed in Patent Document 2, Fe, O, and an added element M which are diffused in soft magnetic metal particles are reacted at the time of sintering so that an Fe-O compound and an Fe-M-O compound are generated. In a cooling step, eutectoid transformation from an FeO phase to an $Fe_3O_4$ phase and an Fe phase occurs.

A soft magnetic body disclosed in Patent Document 3 has a feature in which silicon in a silicon-dispersed layer and a soft magnetic ferrite are reacted in a sintering step so that $Fe_2SiO_4$ or the like is formed on the surfaces of iron-based soft magnetic base material particles.

A magnetic material disclosed in Patent Document 4 has a multi-layer structure including: an oxide layer containing Fe and O; and amorphous $SiO_2$. The magnetic material has a configuration in which $Fe_2SiO_4$ or the like is deposited in the amorphous $SiO_2$.

PRIOR ART DOCUMENT

PATENT DOCUMENT

Patent Document 1: Japanese Patent Application Laid-Open (kokai) No. 2019-75566
Patent Document 2: Japanese Patent Application Laid-Open (kokai) No. 2014-60183
Patent Document 3: Japanese Patent Application Laid-Open (kokai) No. 2016-86124
Patent Document 4: Japanese Patent Application Laid-Open (kokai) No. 2019-09307

SUMMARY OF THE INVENTION

PROBLEM TO BE SOLVED BY THE INVENTION

The dust core disclosed in Patent Document 1 uses a silicone resin for forming the compound layer included in the coating layer, and therefore eddy-current loss is insufficiently decreased, and the strength and the relative permeability are decreased.

The soft magnetic body disclosed in Patent Document 2 employs a method that causes eutectoid transformation of an FeO phase, and therefore eddy-current loss is insufficiently decreased, and the strength and the relative permeability are decreased.

The soft magnetic body disclosed in Patent Document 3 uses silicon particles in the step of forming $Fe_2SiO_4$ or the like, and therefore the structure of the soft magnetic body tends to become uneven, eddy-current loss is insufficiently decreased, and the strength and the relative permeability are decreased.

The magnetic material disclosed in Patent Document 4 includes amorphous $SiO_2$, and therefore the relative permeability is decreased.

Considering these drawbacks, a dust core that sustains low eddy-current loss and that has high strength and high relative permeability has been required.

The present disclosure has been made in view of the above circumstances, and an object of the present disclosure is to provide a dust core that sustains low eddy-current loss and that has high strength and high relative permeability. The present disclosure can be realized in the following forms.

MEANS FOR SOLVING THE PROBLEM

[1] A dust core including

a plurality of alloy particles each including:

a core portion made of an alloy containing iron and silicon; and
a coating portion coating the core portion, wherein the coating portion contains $Fe_2SiO_4$ or a solid-solved body of $Fe_2SiO_4$ and $Mg_2SiO_4$,

a plurality of metal particles each containing silicon in a proportion lower than a proportion of the silicon contained in the alloy is arranged on an outer edge of the coating portion in a scattered manner, and
at least one of the metal particles is present in a state of being held between the coating portions of adjacent ones of the alloy particles.

[2] An alloy particle including:

a core portion made of an alloy containing iron and silicon; and
a coating portion coating the core portion, wherein
the coating portion contains $Fe_2SiO_4$ or a solid-solved body of $Fe_2SiO_4$ and $Mg_2SiO_4$, and
a plurality of metal particles each containing silicon in a proportion lower than a proportion of the silicon contained in the alloy is arranged on an outer edge of the coating portion in a scattered manner.

[3] The dust core according to [1], wherein

the coating portion contains the solid-solved body of $Fe_2SiO_4$ and $Mg_2SiO_4$, and
the solid-solved body has an olivine-type structure.

[4] The dust core according to [1] or [3], wherein
the core portion has a component composition containing

the silicon (Si) in an amount of 2% by mass or higher and 10% by mass or lower,
aluminum (Al) in an amount of 0% by mass or higher and 10% by mass or lower, and
chromium (Cr) in an amount of 0% by mass or higher and 20% by mass or lower, with the remainder being the iron and inevitable impurities.

[5] The dust core according to [4], wherein the component composition is such a composition that $A_3$ transformation from an $\alpha$ phase to a $\gamma$ phase does not occur at 800°C or higher and 1200°C or lower.
[6] The alloy particle according to [2], wherein

the coating portion contains the solid-solved body of $Fe_2SiO_4$ and $Mg_2SiO_4$, and
the solid-solved body has an olivine-type structure.

[7] The alloy particle according to [2] or [6], wherein
the core portion has a component composition containing

the silicon (Si) in an amount of 2% by mass or higher and 10% by mass or lower,
aluminum (Al) in an amount of 0% by mass or higher and 10% by mass or lower, and
chromium (Cr) in an amount of 0% by mass or higher and 20% by mass or lower, with the remainder being the iron and inevitable impurities.

[8] The alloy particle according to [7], wherein the component composition is such a composition that $A_3$ transformation from an $\alpha$ phase to a $\gamma$ phase does not occur at 800°C or higher and 1200°C or lower.
[9] An electronic element including the dust core according to any one of [1] and [3] to [5].
[10] The electronic element according to [9], including a coil in addition to the dust core.
[11] An electronic device including the electronic element according to [9] or [10].
[12] An electric motor including the dust core according to any one of [1] and [3] to [5].
[13] An electric generator including the dust core according to any one of [1] and [3] to [5].

ADVANTAGEOUS EFFECTS OF THE INVENTION

The dust core in the present disclosure makes it possible to provide a dust core that sustains low eddy-current loss and that has high strength and high relative permeability.

BRIEF DESCRIPTION OF THE DRAWINGS

[Fig. 1] Cross-sectional SEM image with which a cross-sectional structure of a dust core was observed.
[Fig. 2] Cross-sectional SEM image with which observation was performed in a field of view narrower than the field of view in Fig. 1.
[Fig. 3] Diagram for schematically explaining a cross-sectional SEM image with which observation was performed in such a field of view as to allow a specific alloy particle and portions of alloy particles around the specific alloy particle to be viewed in the cross-sectional structure of the dust core.
[Fig. 4] Schematic diagram of an inductor in which the dust core is used.
[Fig. 5] Schematic diagram of an inductor in which the dust core is used.
[Fig. 6] Schematic diagram of an inductor in which the dust core is used.
[Fig. 7] Schematic diagram of a noise filter in which the dust core is used.
[Fig. 8] Schematic diagram of a reactor in which the dust core is used.
[Fig. 9] Schematic diagram of a transformer in which the dust core is used.
[Fig. 10] Circuit diagram of a noise filter in which the dust core is used.
[Fig. 11] Schematic diagram of a motor in which the dust core is used.
[Fig. 12] Schematic diagram of an electric generator in which the dust core is used.

MODES FOR CARRYING OUT THE INVENTION

Hereinafter, the present disclosure will be described in detail. In the present description, when "to" is used to describe a numerical value range, the lower limit value and the upper limit value are included unless otherwise noted. For example, a range described as "10 to 20" includes both "10" as the lower limit value and "20" as the upper limit value. That is, the range of "10 to 20" is synonymous with the range of "10 or larger (higher) and 20 or smaller (lower)". Also, in the present description, the upper limit values and the lower limit values of respective numerical value ranges may be arbitrarily combined.

1. Configuration of Dust Core

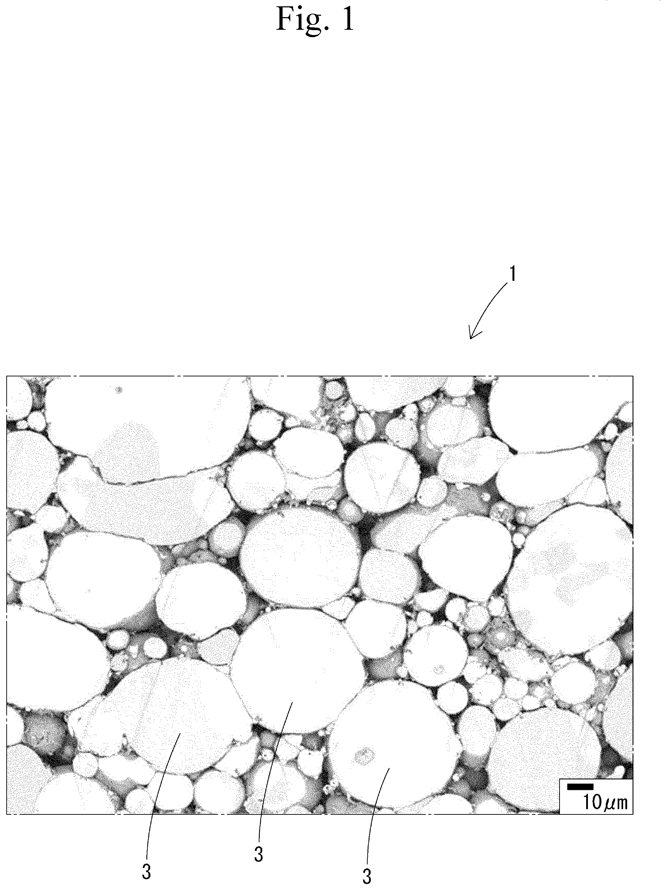

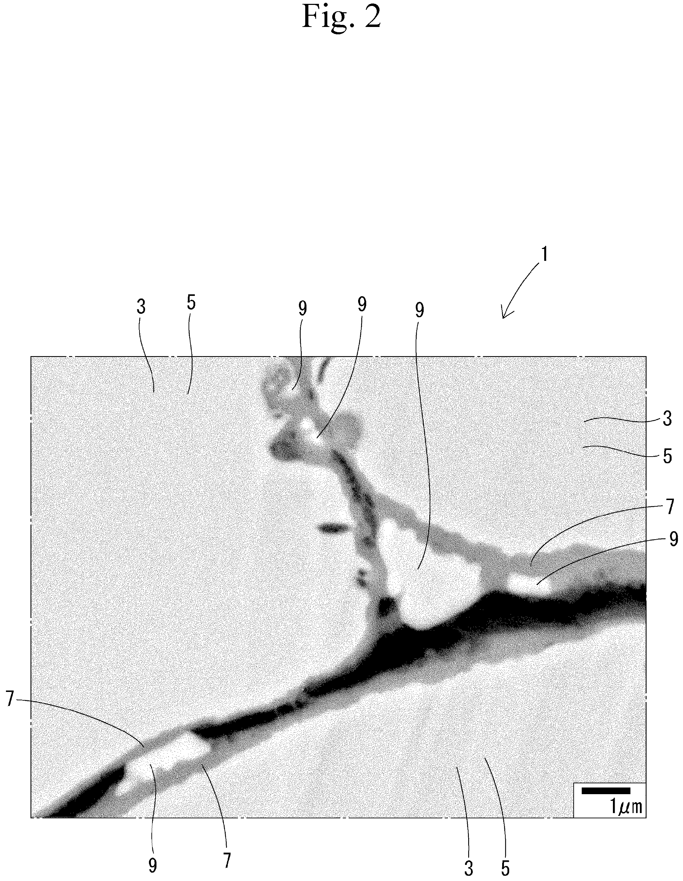

As shown in Fig. 1 which is a cross-sectional SEM image, a dust core 1 has a plurality of alloy particles 3. As shown in Fig. 2 which is a cross-sectional SEM image, each of the alloy particles 3 includes a core portion 5 and a coating portion 7 coating the core portion 5. Fig. 2 is a cross-sectional SEM image with which observation was performed in a field of view narrower than the field of view in Fig. 1. The core portion 5 is made of an alloy containing iron (Fe) and silicon (Si). The coating portion 7 contains $Fe_2SiO_4$ or a solid-solved body of $Fe_2SiO_4$ and $Mg_2SiO_4$. A plurality of metal particles 9 is arranged on an outer edge of the coating portion 7 in a scattered manner. The shape of the dust core 1 is not particularly limited. Each of Fig. 1 and Fig. 2 is a cross-sectional SEM image in a case where the coating portion contains $Fe_2SiO_4$.

The core portion 5 is a soft magnetic metal particle containing iron and silicon. The core portion 5 may further contain aluminum (Al), chromium (Cr), and the like. The core portion 5 contains, for example, the silicon in an amount of 1% by mass to 10% by mass, the aluminum in an amount of 10% by mass or lower, and the chromium (Cr) in an amount of 20% by mass or lower, with the remainder being the iron and inevitable impurities.

From the viewpoint of increasing the saturation magnetic flux density of the dust core 1, the core portion 5 preferably has a component composition containing the silicon (Si) in an amount of 2% by mass or higher and 10% by mass or lower, the aluminum (Al) in an amount of 0% by mass or higher and 10% by mass or lower, and the chromium (Cr) in an amount of 0% by mass or higher and 20% by mass or lower, with the remainder being the iron and inevitable impurities. The amount of the aluminum (Al) contained in the core portion 5 may be 0% by mass. The amount of the chromium (Cr) contained in the core portion 5 may be 0% by mass.

The component composition of the core portion 5 is preferably such a composition that $A_3$ transformation from an α phase to a γ phase does not occur at 800°C or higher and 1200°C or lower. The $A_3$ transformation from an α phase to a γ phase is, for example, transformation from a body-centered cubic (BCC) phase to a face-centered cubic (FCC) phase. Consequently, a minute crack becomes less likely to be generated in the coating portion 7, insulation properties can be inhibited from being decreased as a result of occurrence of sintering between adjacent ones of the alloy particles 3 through such a crack, and thus eddy-current loss can be inhibited from being decreased.

The average particle diameter of the core portions 5 is 10 $\mu$m or larger and 70 $\mu$m or smaller, preferably 10 $\mu$m or larger and 50 $\mu$m or smaller, and more preferably 10 $\mu$m or larger and 40 $\mu$m or smaller. The average particle diameter of the core portions 5 can be changed as appropriate according to the frequency band in which the dust core 1 is used. For example, in a case where use in a high frequency band of higher than 50 kHz is assumed, the average particle diameter is preferably 10 $\mu$m or larger and 50 $\mu$m or smaller. When the dust core 1 is used in such a high frequency band, eddy current might be generated in each of the core portions 5, and loss (eddy-current loss) might be generated. The amount of the generated eddy-current loss is proportional to the second power of the frequency and is proportional to the second power of the particle diameter. Therefore, in a case where the dust core 1 is used in a high frequency band, the particle diameter is preferably small.

The average particle diameter of the core portions 5 is obtained as follows. A cross section of the dust core 1 is observed with a field emission-scanning electron microscope (FE-SEM), and an area-equivalent circular diameter is calculated as the average particle diameter from particle areas obtained through the observation. Specifically, an average equivalent circular diameter is obtained as follows. In a predetermined observation field of view (e.g., 200 $\mu$m $\times$ 200 $\mu$m), a plurality of the core portions 5 that can be observed without being partially invisible are focused on. The diameter (area-equivalent circular diameter) of an ideal circle (perfect circle) having an area equal to the area (projected area) of each of particle images showing the core portions 5 is calculated as the equivalent circular diameter of the corresponding particle. Then, the arithmetic average of the equivalent circular diameters of the respective particles is calculated, whereby an average equivalent circular diameter is obtained. The equivalent circular diameters of the respective particles and the average equivalent circular diameter of the equivalent circular diameters can be obtained by using generally-used image analysis software.

The coating portion 7 contains $Fe_2SiO_4$ or a solid-solved body of $Fe_2SiO_4$ and $Mg_2SiO_4$. A crystalline phase ($Fe_2SiO_4$, $MgFeSiO_4$, or the like) in the coating portion 7 is identified by performing X-ray diffraction (XRD) analysis on a cross section of the dust core 1. In a case where the coating portion contains $Fe_2SiO_4$, the result of simplified quantification of the compositional proportion of each component performed through a reference intensity ratio (RIR) method indicates that the proportion of the $Fe_2SiO_4$ in the coating portion 7 is largest next to the proportion of the crystalline phase of the core portion 5 in the dust core 1. The average thickness of the coating portions 7 is 0.01 $\mu$m or larger and 1 $\mu$m or smaller. The thickness of the coating portions 7 is preferably 0.015% or higher and 10% or lower of the average particle diameter of the core portions 5.

In a case where the coating portion 7 contains a solid-solved body of $Fe_2SiO_4$ and $Mg_2SiO_4$, the compositional formula of the solid-solved body can be represented by $Mg_XFe_{2-X}SiO_4$. In the compositional formula, X preferably satisfies the relational expression 0<X<2, more preferably satisfies the relational expression 0<X<1.2, and further preferably satisfies the relational expression 0.2<X<1.2. In the case where the coating portion 7 contains a solid-solved body of $Fe_2SiO_4$ and $Mg_2SiO_4$, the solid-solved body is preferably formed at any composition ratio between the $Fe_2SiO_4$ and the $Mg_2SiO_4$. In the case where the coating portion 7 contains a solid-solved body of $Fe_2SiO_4$ and $Mg_2SiO_4$, the solid-solved body preferably has, as a crystal structure detected through X-ray diffraction (XRD) analysis, an olivine-type structure of an orthorhombic-crystal-system space group Pbnm. Consequently, the coefficient of thermal expansion of the coating portion 7 can be set to be close to the coefficient of thermal expansion of the alloy of the core portion 5. Thus, a crack is less likely to be generated in the coating portion 7 in an annealing step, and the eddy-current loss can be inhibited from being decreased.

Each of the metal particles 9 is a particle having a low silicon concentration. The metal particle 9 contains silicon in a proportion lower than a proportion of the silicon contained in the core portion 5. The concentration of the silicon in the metal particle 9 can be measured by performing SEM energy-dispersive X-ray spectroscopy (SEM-EDS) on a cross section of the dust core 1. The metal particle 9 is preferably made of pure iron. The average particle diameter of the metal particles 9 is, for example, 0.1 $\mu$m or larger and 3 $\mu$m or smaller. The ratio of the average particle diameter of the metal particles 9 to the average particle diameter of the alloy particles 3 is 0.14% or higher and 25% or lower. A plurality of the metal particles 9 is arranged on the outer edge of the coating portion 7 in a scattered manner. The phrase "a plurality of the metal particles 9 is arranged in a scattered manner" refers to a situation where two or more of the metal particles 9 are arranged away from each other. In an image showing a cross section, two or more of the metal particles 9 are preferably arranged on the outer edge of one alloy particle 3, and three or more of the metal particles 9 are more preferably arranged on the outer edge of one alloy particle 3. Meanwhile, 50 or less of the metal particles 9 are preferably arranged on the outer edge of one alloy particle 3. One of two or more metal particles 9 is preferably held between adjacent ones of the alloy particles 3.

At least one of the plurality of metal particles 9 is present in a state of being held between the coating portions 7 of adjacent ones of the alloy particles 3. All of the plurality of metal particles 9 may be present in a state of being held between the coating portions 7 of adjacent ones of the alloy particles 3. The metal particle 9 may be partially connected to the core portion 5. Furthermore, a gap may be present between the metal particle 9 and the adjacent alloy particles 3.

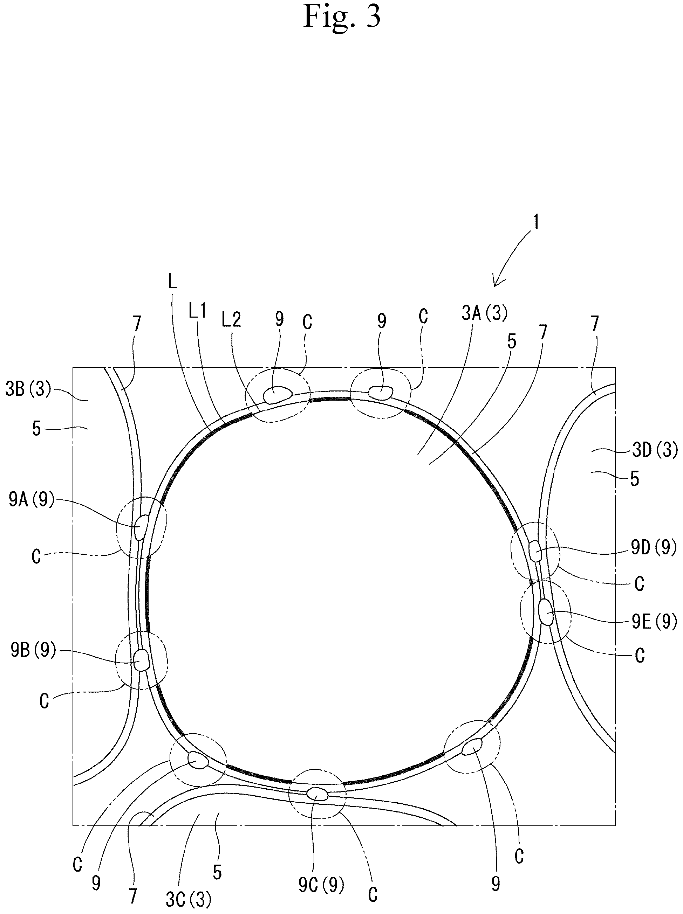

Arrangement of the metal particles 9 will be described with reference to Fig. 3. Fig. 3 is a diagram for schematically explaining a cross-sectional SEM image with which observation was performed in such a field of view as to allow a specific alloy particle 3 and portions of alloy particles 3 around the specific alloy particle 3 to be viewed in the cross-sectional structure of the dust core. With focus being placed on an alloy particle 3 positioned at the center of Fig. 3 (referred to as alloy particle 3A), a first portion L1 (thick-line portions in Fig. 3) and a second portion L2 (thin-line portions in Fig. 3) are present as portions of a contour L of the core portion 5 included in the alloy particle 3A. The first portion L1 is a portion positioned away from the outer edge of a metal particle 9 by at least 1 $\mu$m. In Fig. 3, imaginary circles C are drawn. Each of the imaginary circles C indicates the position away from the outer edge of the corresponding metal particle 9 by 1 $\mu$m. The first portion L1 is a portion, of the contour L, that is positioned outside of the imaginary circle C. The second portion L2 is a portion, of the contour L, that is positioned within a range of 1 $\mu$m from the outer edge of the metal particle 9. That is, the second portion L2 is a portion, of the contour L, that is positioned inside of the imaginary circle C.

The proportion of the length of the first portion L1 to the length in the circumferential direction of the contour L is 50% or higher. In a case where a plurality of the first portions L1 are present as portions of the contour L, the length of the first portion L1 mentioned herein refers to the total length of all of the first portions L1. With focus being placed on the second portion L2, the proportion of the length of the second portion L2 to the length in the circumferential direction of the entire contour L is lower than 50%. In a case where a plurality of the second portions L2 are present as portions of the contour L, the length of the second portion L2 mentioned herein refers to the total length of all of the second portions L2.

A plurality of (in Fig. 3, nine) metal particles 9 is arranged on the outer edge of the coating portion 7 of the alloy particle 3A in a scattered manner. In Fig. 3, alloy particles 3B, 3C, and 3D are present as alloy particles 3 adjacent to the alloy particle 3A. At least one of the metal particles 9 (in Fig. 3, five metal particles 9A to 9E) is present in a state of being held between the coating portions 7 of adjacent ones of the alloy particles 3. For example, the metal particles 9A and 9B are present in a state of being held between the coating portions 7 of the alloy particle 3A and the alloy particle 3B. The metal particle 9C is present in a state of being held between the coating portions 7 of the alloy particle 3A and the alloy particle 3C. The metal particles 9D and 9E are present in a state of being held between the coating portions 7 of the alloy particle 3A and the alloy particle 3D.

2. Advantageous Effects of Dust Core

In the dust core 1 in the present disclosure, the coating portion 7 contains $Fe_2SiO_4$ or a solid-solved body of $Fe_2SiO_4$ and $Mg_2SiO_4$, whereby insulation properties between the alloy particles 3 become high, and the eddy-current loss can be decreased.

In the dust core 1 in the present disclosure, the $Fe_2SiO_4$ included in the coating portion 7 has a melting point (1205°C) lower than the melting point (1371°C) of iron oxide, whereby the coating portions 7 are easily sintered together, and the strength can be made high.

In the dust core 1 in the present disclosure, the plurality of metal particles 9 each containing silicon in a proportion lower than the proportion of the silicon contained in the alloy of the core portion 5 is arranged on the outer edge of the coating portion 7 in a scattered manner. At least one of the metal particles 9 is present in a state of being held between the coating portions 7 of adjacent ones of the alloy particles 3. Consequently, the relative permeability of the dust core 1 can be made high. In particular, as the concentration of the silicon in the core portion 5 is lower, the relative permeability of the dust core 1 can be made higher.

The strength of the dust core 1 in the present disclosure can be made high by being formed through pressing of a raw material powder including the alloy particles 3. The coating portions 7 each have a low silicon concentration, and thus are deformed at the time of the pressing so that the alloy particles 3 are easily bound to each other.

In the dust core 1 in the present disclosure, since the plurality of metal particles 9 each containing silicon in a proportion lower than the proportion of the silicon contained in the alloy of the core portion 5 is arranged on the outer edge of the coating portion 7 in a scattered manner, the metal particles 9 are less likely to be a path for eddy current as compared with a configuration in which the metal particles 9 are present in a connected state, and thus the eddy-current loss can be decreased.

In the dust core 1 in the present disclosure, it is preferable that: the coating portion 7 contains the solid-solved body of $Fe_2SiO_4$ and $Mg_2SiO_4$; and the solid-solved body of $Fe_2SiO_4$ and $Mg_2SiO_4$ has an olivine-type structure. The coefficient of thermal expansion of $Mg_2SiO_4$ is larger than the coefficient of thermal expansion of $Fe_2SiO_4$, and is closer to the coefficient of thermal expansion of the alloy of the core portion 5 than the coefficient of thermal expansion of $Fe_2SiO_4$ is. $Mg_2SiO_4$ and $Fe_2SiO_4$ have crystal structures, which are the same olivine-type structure, and form a solid-solved body at any ratio therebetween, and a higher proportion of the $Mg_2SiO_4$ leads to a larger coefficient of thermal expansion of the solid-solved body. Therefore, when the coating portion 7 contains the solid-solved body of $Fe_2SiO_4$ and $Mg_2SiO_4$, the coefficients of thermal expansion of the coating portion 7 and the core portion 5 become close to each other. Thus, a crack becomes less likely to be generated in the coating portion 7 owing to the difference between the coefficients of thermal expansion of the coating portion 7 and the core portion 5 even in an annealing step, for example. As a result, the eddy-current loss can be decreased.

In the dust core 1 in the present disclosure, the component composition of the core portion 5 is preferably such a composition that $A_3$ transformation from an $\alpha$ phase to a $\gamma$ phase does not occur at 800°C or higher and 1200°C or lower. In a case where the core portion 5 is made of pure iron, for example, heating of the pure iron leads to occurrence of $A_3$ transformation from an $\alpha$ phase to a $\gamma$ phase at an $A_3$ transformation point of 911°C, whereby a rapid volume shrinkage by 5% or higher occurs. In contrast, cooling of the pure iron leads to occurrence of a rapid volume expansion. When this transformation occurs in an annealing step, a minute crack is generated in the coating portion 7, and sintering occurs between adjacent ones of the alloy particles 3 through the crack. Consequently, insulation properties are decreased, and the eddy-current loss becomes less likely to be decreased. Even in a case where the core portion 5 is made of an Fe-Si alloy, this transformation might occur with a composition in which the amount of Si added is small. When the amount of Si, Al, Cr, or the like added in the core portion 5 is increased, an alloy that does not undergo this transformation can be obtained. For example, in the case where the core portion 5 is made of an Fe-Si alloy, Si is preferably contained in an amount of 2% by mass or higher and 10% by mass or lower. In a case where the core portion 5 is made of an Fe-Al alloy, Al is preferably contained in an amount of 1% by mass or higher and 10% by mass or lower. In a case where the core portion 5 is made of an Fe-Cr alloy, Cr is preferably contained in an amount of 13% by mass or higher and 20% by mass or lower. In the core portion 5, Si may be added alone, but, when Al and Cr are added together with Si, the amount of Si to be added can be decreased.

3. Manufacturing Method for Dust Core

The manufacturing method for the dust core 1 is not particularly limited. The manufacturing method will be described below.

(1) Production of Coated Powder

A coating made of a ferrite is formed on each of the core portions 5 through a plating method. The method for forming the coating may be, instead of the plating method, a milling method, a spraying method, a sol-gel method, a coprecipitation method, or the like. The ferrite may be magnetite ($Fe_3O_4$). Alternatively, the ferrite may also be Ni ferrite, Zn ferrite, Mn ferrite, Mg ferrite, MnZn ferrite, NiZn ferrite, or the like.

In the plating method, an oxidizing agent (nitrous acid salt) is added to an aqueous solution containing the core portions 5 and divalent ions such as ferrous ions while the pH of the aqueous solution is being controlled, whereby a coating made of the ferrite is formed. The aqueous solution having been made is filtered, and drying is performed to obtain a coated powder.

(2) Heating

The obtained coated powder is heated to obtain an alloy powder containing the alloy particles 3. Each of the core portions 5 is coated with the corresponding coating portion 7 containing $Fe_2SiO_4$ or a solid-solved body of $Fe_2SiO_4$ and $Mg_2SiO_4$. A plurality of metal particles 9 each containing silicon in a proportion lower than the proportion of the silicon contained in the core portion 5 is arranged on the outer edge of the coating portion 7 in a scattered manner.

(3) Molding (Compacting)

The obtained alloy powder is compacted and annealed to obtain the dust core 1. The compacting is performed by, for example, applying a surface pressure of 0.5 GPa to 2.0 GPa. A small amount of an organic binder or an internal lubricant (stearic acid salt or the like) may be mixed in order to improve moldability. In addition, a release agent such as a stearic acid salt may be applied on a mold. Uniaxial pressing may be performed. Alternatively, cold isostatic pressing (CIP) or the like may be performed.

The dust core 1 is obtained also by compacting and annealing the coated powder obtained in the above step (1), without heating the coated powder.

(4) Heating and Annealing

In the annealing step, each of the coatings made of the ferrite and the silicon in the corresponding core portion 5 are reacted, whereby $Fe_2SiO_4$ or a solid-solved body of $Fe_2SiO_4$ and $Mg_2SiO_4$ is generated. At the same time, in the annealing step, the metal particles 9 each having a low silicon concentration are deposited on the coating surfaces so as to be present in a scattered manner.

The heating of the coated powder and the post-molding annealing are performed in a non-oxidizing atmosphere (an $N_2$ atmosphere, an Ar atmosphere, or an $H_2$ atmosphere). The highest temperature in each of the heating and the annealing is preferably 700°C to 1050°C. This is because the temperature in this range leads to progression of a reaction of forming $Fe_2SiO_4$ or a solid-solved body of $Fe_2SiO_4$ and $Mg_2SiO_4$ and enables decrease of the eddy-current loss. The highest temperature in each of the heating and the annealing is more preferably 900°C to 1050°C. This is because the temperature in this range leads to decrease of a strain inside the core portion 5 and enables decrease of hysteresis loss. By setting the highest temperature in each of the heating and the annealing to 1050°C or lower, sintering between the alloy particles 3 can be suppressed, so that the eddy-current loss can be decreased. The annealing temperature is preferably maintained for 1 hour or longer. This is because, by doing so, the reaction of forming $Fe_2SiO_4$ or a solid-solved body of $Fe_2SiO_4$ and $Mg_2SiO_4$ progresses and the eddy-current loss can be decreased. In the step of cooling from 600°C to 300°C, the cooling is preferably performed at a cooling speed of 2°C/min or higher. This is because, by doing so, the eddy-current loss is inhibited from increasing due to eutectoid transformation of FeO in a case where a minute amount of FeO is solid-solved in the $Fe_2SiO_4$.

4. Application Examples of Dust Core

The above dust core 1 is suitably used for an electronic element. Examples of the electronic element include inductors, choke coils, noise filters, reactors, transformers, and the like. The electronic element includes, for example, the dust core 1 and a coil.

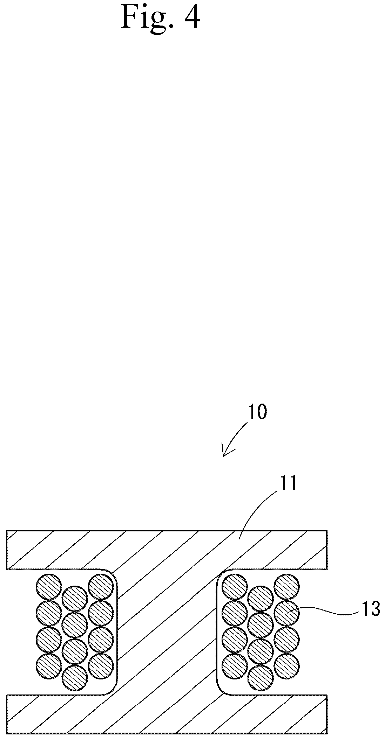

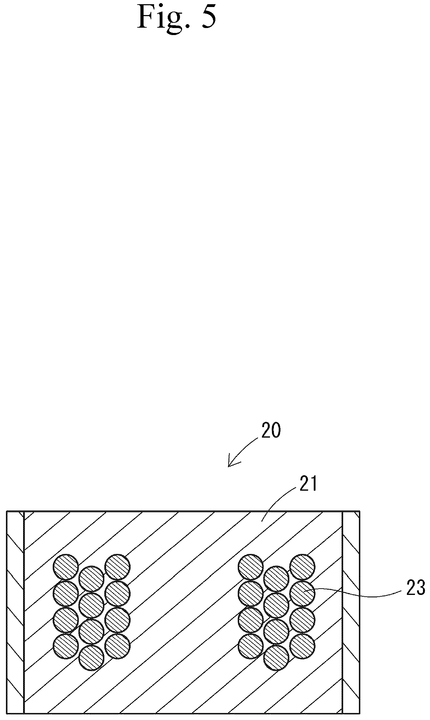

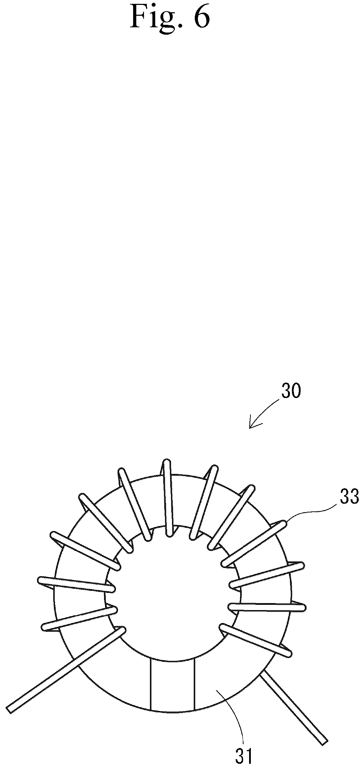

Inductors 10, 20, and 30 shown in Fig. 4 to Fig. 6 are examples of the electronic element in the present disclosure. The inductor 10 shown in Fig. 4 includes a dust core 11 and a coil 13. The inductor 20 shown in Fig. 5 includes a dust core 21 and a coil 23. The inductor 30 shown in Fig. 6 includes a dust core 31 and a coil 33. The dust cores 11, 21, and 31 each have the same configuration as that of the dust core 1.

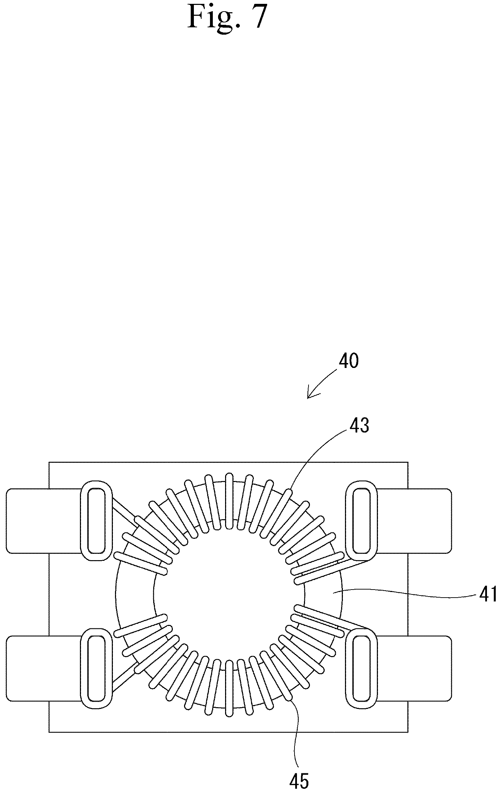

A noise filter 40 shown in Fig. 7 is an example of the electronic element in the present disclosure. The noise filter 40 includes a dust core 41 and a pair of coils 43 and 45. The dust core 41 has the same configuration as that of the dust core 1.

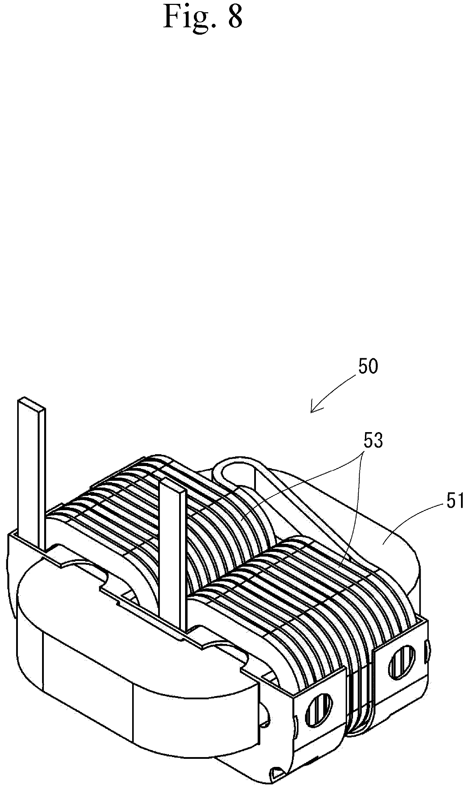

A reactor 50 shown in Fig. 8 is an example of the electronic element in the present disclosure. The reactor 50 includes a dust core 51 and coils 53. The dust core 51 has the same configuration as that of the dust core 1.

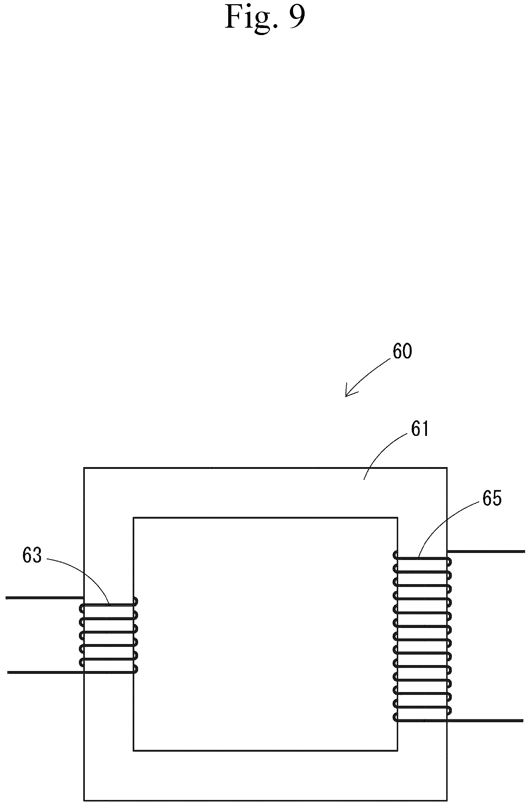

A transformer 60 shown in Fig. 9 is an example of the electronic element in the present disclosure. The transformer 60 includes a dust core 61 and a pair of coils 63 and 65. The dust core 61 has the same configuration as that of the above dust core 1.

The above dust core 1 is suitably used for an electronic device. The electronic device includes an electronic element. Examples of the electronic element include the above electronic elements.

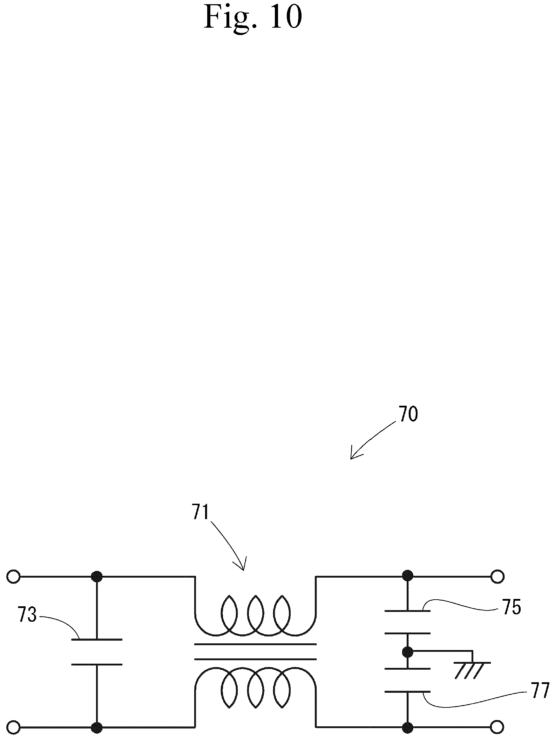

A noise filter 70 shown in Fig. 10 is an example of the electronic device in the present disclosure. The noise filter 70 includes an element 71 and capacitors 73, 75, and 77. The element 71 corresponds to an example of the "electronic element" in the present disclosure. The element 71 is, for example, an element having the same configuration as that of the noise filter 40 shown in Fig. 7.

The above dust core 1 is suitably used for an electric motor. Examples of the electric motor include motors, linear actuators, and the like.

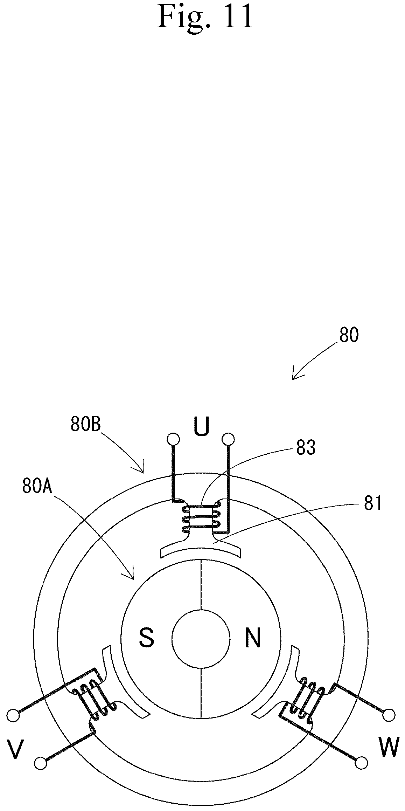

A motor 80 shown in Fig. 11 is an example of the electric motor in the present disclosure. The motor 80 includes a rotor 80A and a stator 80B. The stator 80B has a dust core 81 and coils 83. The dust core 81 has the same configuration as that of the above dust core 1.

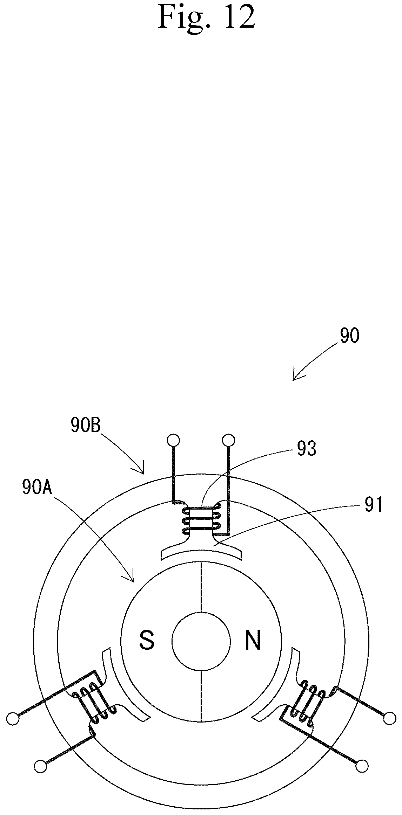

An electric generator 90 shown in Fig. 12 is an example of an electric generator in the present disclosure. The electric generator 90 includes a rotor 90A and a stator 90B. The stator 90B has a dust core 91 and coils 93. The dust core 91 has the same configuration as that of the above dust core 1.

EXAMPLES

Hereinafter, the present invention will be described more specifically by means of Examples.

1. Manufacturing of Dust Cores

The compositions of alloy particles of dust cores in Examples 1 to 3 and Comparative Examples 1 and 2 are indicated in Table 1. In the column "Composition of core portion" in Table 1, each wording "Fe-6.5%Si" means that the core portion of the corresponding alloy particle contained 6.5% by mass of silicon, with the remainder being iron and inevitable impurities.

[Table 1]

| | Composition of core portion | Crystalline phase of coating portion | State of metal particles | Eddy-current loss (kW/m$^3$) | Strength of dust core (MPa) | Relative permeability of dust core | Annealing temperature (°C) |
|---|---|---|---|---|---|---|---|
| Example 1 | Fe-6. 5%Si | Fe$_2$SiO$_4$ | Scattered | 1.8 | 58 | 62 | 800 |
| Example 2 | Fe-6. 5%Si | Fe$_2$SiO$_4$ | Scattered | 1.9 | 67 | 78 | 1000 |
| Example 3 | Fe-6. 5%Si | Fe$_2$SiO$_4$ | Scattered | 1.8 | 80 | 80 | 900 |
| Comparative Example 1 | Fe-6. 5%Si | Fe$_3$O$_4$ (spinel type) | No metal particles | 9.3 | 35 | 40 | 600 |
| Comparative Example 2 | Fe-6. 5%Si | Fe$_2$SiO$_4$ | Connected | 7.8 | 61 | 65 | 600 |

The compositions of alloy particles of dust cores in Examples 4 and 5 and Comparative Examples 3 and 4 are indicated in Table 2. In the column "Composition of core portion" in Table 2, each wording "Fe-6.5%Si" means that the core portion of the corresponding alloy particle contained 6.5% by mass of silicon, with the remainder being iron and inevitable impurities. In the column "Composition of core portion" in Table 2, each wording "Fe-1.0%Si" means that the core portion of the corresponding alloy particle contained 1.0% by mass of silicon, with the remainder being iron and inevitable impurities.

[Table 2]

| | Composition of core portion | Crystalline phase of coating portion | State of metal particles | Eddy-current loss (kW/m$^3$) | Strength of dust core (MPa) | Relative permeability of dust core | Annealing temperature (°C) |
|---|---|---|---|---|---|---|---|
| Example 4 | Fe-6.5%Si | MgFeSiO$_4$ | Scattered | 1.8 | 74 | 57 | 1050 |
| Example 5 | Fe-6.5%Si | MgFeSiO$_4$ | Scattered | 1.9 | 85 | 61 | 1050 |
| Comparative Example 3 | Fe-1.0%Si | MgFeSiO$_4$ | Connected | 350 | 92 | 105 | 1050 |
| Comparative Example 4 | Fe-1.0%Si | Fe$_2$SiO$_4$ | Connected | 450 | 110 | 120 | 1050 |

(1) Examples 1 to 3

In each of Examples 1 to 3, core portions containing 6.5% by mass of silicon, with the remainder being iron and inevitable impurities, were used as a raw material powder and coated with MnZn ferrite through a plating method.
In Example 1, after the core portions were coated, the coated core portions were compacted at 1 GPa and annealed while being kept at 800°C for 1.5 hours. In a cooling step, cooling from 600°C to 300°C was performed at a cooling speed of 2°C/min.
In Example 2, after the core portions were coated, the coated core portions were compacted at 1 GPa and annealed while being kept at 1000°C for 1.5 hours. In a cooling step, cooling from 600°C to 300°C was performed at a cooling speed of 2°C/min.
In Example 3, after the core portions were coated, the coated core portions were heated in powder form while being kept at 900°C for 1.5 hours and were cooled. In this cooling step, cooling from 600°C to 300°C was performed at a cooling speed of 2°C/min. Thereafter, the powder was compacted at 1 GPa, was annealed while being kept at 1000°C for 1.5 hours, and was cooled. In this cooling step, cooling from 600°C to 300°C was performed at a cooling speed of 2°C/min.

(2) Comparative Examples 1 and 2

In each of Comparative Examples 1 and 2, core portions containing 6.5% by mass of silicon, with the remainder being iron and inevitable impurities, were used as a raw material powder and coated with MnZn ferrite through the plating method, in the same manner as in Examples 1 to 3.
In Comparative Example 1, after the core portions were coated, the coated core portions were compacted at 1 GPa and annealed while being kept at 600°C for 0.5 hours. In a cooling step, cooling from 600°C to 300°C was performed at a cooling speed of 1°C/min.

In Comparative Example 2, after the core portions were coated, the coated core portions were compacted at 1 GPa and annealed while being kept at 600°C for 1.5 hours. In a cooling step, cooling from 600°C to 300°C was performed at a cooling speed of 1°C/min.

(3) Examples 4 and 5

In each of Examples 4 and 5, core portions containing 6.5% by mass of silicon, with the remainder being iron and inevitable impurities, were used as a raw material powder and coated with Mg ferrite through the plating method.

In Example 4, after the core portions were coated, the coated core portions were compacted at 1 GPa and annealed while being kept at 1050°C for 2.0 hours. In a cooling step, cooling from 600°C to 300°C was performed at a cooling speed of 2°C/min.

In Example 5, after the core portions were coated, the coated core portions were heated in powder form while being kept at 900°C for 1.5 hours and were cooled. In this cooling step, cooling from 600°C to 300°C was performed at a cooling speed of 2°C/min. Thereafter, the powder was compacted at 1 GPa, was annealed while being kept at 1050°C for 2.0 hours, and was cooled. In this cooling step, cooling from 600°C to 300°C was performed at a cooling speed of 2°C/min.

(4) Comparative Examples 3 and 4

In Comparative Example 3, core portions containing 1.0% by mass of silicon, with the remainder being iron and inevitable impurities, were used as a raw material powder and coated with Mg ferrite through the plating method. After the core portions were coated, the coated core portions were compacted at 1 GPa and annealed while being kept at 1050°C for 2.0 hours. In a cooling step, cooling from 600°C to 300°C was performed at a cooling speed of 2°C/min.

In Comparative Example 4, core portions containing 1.0% by mass of silicon, with the remainder being iron and inevitable impurities, were used as a raw material powder and coated with MnZn ferrite through the plating method. After the core portions were coated, the coated core portions were compacted at 1 GPa and annealed while being kept at 1050°C for 1.5 hours. In a cooling step, cooling from 600°C to 300°C was performed at a cooling speed of 2°C/min.

Regarding the above Examples and Comparative Examples, when the core portions were coated with MnZn ferrite through the plating method, the ratio (molar ratio) among the concentrations of the divalent ions contained in an aqueous solution used in the plating method was set to $Fe^{2+}:Mn^{2+}:Zn^{2+}=100:8:12$.

In addition, regarding the above Examples and Comparative Examples, when the core portions were coated with Mg ferrite through the plating method, the ratio (molar ratio) between the concentrations of the divalent ions contained in an aqueous solution used in the plating method was set to $Fe^{2+}:Mg^{2+}=100:100$.

2. Method for Evaluating Crystalline Phase of Coating Portion

By performing X-ray diffraction (XRD) analysis on a cross section of each of the dust cores, the crystalline phase of the coating portion was identified. In each of Examples 4 and 5 and Comparative Example 3, the cross section of the corresponding dust core was observed by using an SEM, and EDS analysis was performed to confirm that Mg was detected from the coating portion.

3. Method for Evaluating State of Metal Particles

An arbitrarily selected cross section of each of the dust cores was observed by using an SEM. Whether or not a plurality of metal particles was present in a scattered manner in a state of being held between the coating portions of adjacent ones of the alloy particles, was checked. Specifically, whether or not two or more metal particles were arranged away from each other between adjacent ones of the alloy particles, was checked.

4. Method for Evaluating Eddy-Current Loss

The eddy-current loss of each of the dust cores was evaluated by using a measurement device (B-H analyzer (model number: SY-8218) manufactured by IWATSU ELECTRIC CO., LTD.). The evaluation was made under conditions of 0.1 T and 10 kHz by using the following modified Steinmetz equation regarding iron loss.

[Math. 1]

$$ P_{CV} = K_h B_m^{\beta} f + K_C (B_m f)^2 + K_e (B_m f)^{1.5} $$

$P_{CV}$ : iron loss

$K_h B_m^{\beta} f$ : term of hysteresis loss

$K_C (B_m f)2$ : term of eddy-current loss

$K_e (B_m f)^{1.5}$ : term of residual loss

5. Method for Evaluating Strength

A test piece (50 mm × 4 mm × 3 mm (thickness)) of each of the dust cores was made and subjected to a three-point bending test, and thus an index of the strength of the dust core was obtained.

6. Method for Evaluating Relative Permeability

The relative permeability of each of the dust cores was measured by using the measurement device (B-H analyzer (model number: SY-8218) manufactured by IWATSU ELECTRIC CO., LTD.). The relative permeability was evaluated under the conditions of 0.1 T and 10 kHz.

7. Evaluation Results

The evaluation results are indicated in Tables 1 and 2.
Examples 1 to 3 satisfy the following requirements (A) to (C):

· requirement (A) that the core portion of each of the alloy particles is coated with a coating portion containing $Fe_2SiO_4$;
· requirement (B) that a plurality of metal particles each containing silicon in a proportion lower than the proportion of the silicon contained in the alloy is arranged on an outer edge of the coating portion in a scattered manner; and
· requirement (C) that at least one of the metal particles is present in a state of being held between the coating portions of adjacent ones of the alloy particles.

Meanwhile, Comparative Examples 1 and 2 do not satisfy the above requirements (A) to (C). In Comparative Example 1, $Fe_3O_4$ of a spinel type was observed as a crystalline phase of the coating portion, and no metal particles were observed. In Comparative Example 2, the metal particles were present not in a scattered manner but in a connected state.
The eddy-current losses in Examples 1 to 3 which satisfy the above requirements (A) to (C) were respectively 1.8 kW/m³, 1.9 kW/m³, and 1.8 kW/m³. The eddy-current losses in Comparative Examples 1 and 2 which do not satisfy the above requirements (A) to (C) were respectively 9.3 kW/m³ and 7.8 kW/m³. It is considered that, in each of Examples 1 to 3, the coating portion of each of the alloy particles did not contain iron oxide but contained $Fe_2SiO_4$, and thus insulation properties between the alloy particles were high and the eddy-current loss was able to be decreased. In addition, it is considered that, in each of Examples 1 to 3, the plurality of metal particles was present in a scattered manner in a state of being held between the coating portions of adjacent ones of the alloy particles, and thus the metal particles were less likely to be a path for eddy current and the eddy-current loss was able to be decreased. Meanwhile, it is considered that, in Comparative Example 1, the annealing temperature was as low as 600°C and the annealing time was as short as 0.5 hours, and thus a reaction of forming $Fe_2SiO_4$ was less likely to progress and the eddy-current loss was increased. It is considered that, in Comparative Example 2, the speed of cooling from 600°C to 300°C in the cooling step was as low as 1°C/min, and thus, in a case where a minute amount of FeO was solid-solved in $Fe_2SiO_4$, eutectoid transformation of the FeO caused increase in the eddy-current loss.
The indexes of strengths obtained through three-point bending tests in each of Examples 1 to 3 which satisfy the above requirements (A) to (C) were 58 MPa to 80 MPa. The indexes of strengths obtained in three-point bending tests in Comparative Examples 1 and 2 which do not satisfy the above requirements (A) to (C) were respectively 35 MPa and 61 MPa. It is considered that, in each of Examples 1 to 3, the metal particles each had a low silicon concentration and were deformed at the time of compacting so that the alloy particles were easily bound to each other, whereby the strength was increased. In addition, it is considered that, in each of Examples 1 to 3 and Comparative Example 2, the coating portion of each of the alloy particles contained $Fe_2SiO_4$ having a lower melting point than iron oxide, and thus the coating portions were easily sintered together, whereby the strength was increased.

The relative permeability in each of Examples 1 to 3 which satisfy the above requirements (A) to (C) was 62 to 80. The relative permeabilities in Comparative Examples 1 and 2 which do not satisfy the above requirements (A) to (C) were respectively 40 and 65. It is considered that, in each of Examples 1 to 3, the plurality of metal particles was present in a scattered manner in a state of being held between the coating portions of adjacent ones of the alloy particles, and the alloy particles were magnetically bound to each other, whereby the relative permeability was increased.

Examples 4 and 5 satisfy the following requirements (D) to (F):

· requirement (D) that the core portion of each of the alloy particles is coated with a coating portion containing a solid-solved body of $Fe_2SiO_4$ and $Mg_2SiO_4$;
· requirement (E) that a plurality of metal particles each containing silicon in a proportion lower than the proportion of the silicon contained in the alloy is arranged on an outer edge of the coating portion in a scattered manner; and
· requirement (F) that at least one of the metal particles is present in a state of being held between the coating portions of adjacent ones of the alloy particles.

Meanwhile, Comparative Examples 3 and 4 do not satisfy the above requirements (D) to (F). In Comparative Example 3, $MgFeSiO_4$ was observed as a crystalline phase of the coating portion, but the metal particles were present not in a scattered manner but in a connected state. In Comparative Example 4, $Fe_2SiO_4$ was observed as a crystalline phase of the coating portion, but the metal particles were present not in a scattered manner but in a connected state.

The eddy-current losses in Examples 4 and 5 which satisfy the above requirements (D) to (F) were respectively 1.8 kW/m$^3$ and 1.9 kW/m$^3$. The eddy-current losses in Comparative Examples 3 and 4 which do not satisfy the above requirements (D) to (F) were respectively 350 kW/m$^3$ and 450 kW/m$^3$. It is considered that, in each of Examples 4 and 5, the coating portion of each of the alloy particles did not contain iron oxide but contained a solid-solved body of $Fe_2SiO_4$ and $Mg_2SiO_4$, and thus insulation properties between the alloy particles were high and the eddy-current loss was able to be decreased. In addition, it is considered that, in each of Examples 4 and 5, the plurality of metal particles was present in a scattered manner in a state of being held between the coating portions of adjacent ones of the alloy particles, and thus the metal particles were less likely to be a path for eddy current and the eddy-current loss was able to be decreased. Meanwhile, it is inferred that, in each of Comparative Examples 3 and 4, each of the core portions had a lower Si content than those in Examples 4 and 5, and the alloy included in the core portion underwent $A_3$ transformation from an $\alpha$ phase to a $\gamma$ phase in the annealing step. Thus, it is considered that this transformation led to generation of a minute crack in the coating portion and caused sintering between adjacent ones of the alloy particles through the crack, whereby the insulation properties were decreased and the eddy-current loss was increased.

The indexes of strengths obtained in three-point bending tests in Examples 4 and 5 which satisfy the above requirements (D) to (F) were respectively 74 MPa and 85 MPa. In Examples 4 and 5, strengths approximately equal to those in Examples 1 to 3 were obtained. It is considered that, in each of Examples 4 and 5, the metal particles each had a low silicon concentration and were deformed at the time of compacting so that the alloy particles were easily bound to each other, whereby the strength was increased. In addition, it is considered that, in each of Examples 4 and 5, the coating portion of each of the alloy particles contained a solid-solved body of $Fe_2SiO_4$ and $Mg_2SiO_4$ having a lower melting point than iron oxide, and thus the coating portions were easily sintered together, whereby the strength was increased.

The relative permeabilities in Examples 4 and 5 which satisfy the above requirements (D) to (F) were respectively 57 and 61. In Examples 4 and 5, relative permeabilities approximately equal to those in Examples 1 to 3 were obtained. It is considered that, in each of Examples 4 and 5, the plurality of metal particles was present in a scattered manner in a state of being held between the coating portions of adjacent ones of the alloy particles, and the alloy particles were magnetically bound to each other, whereby the relative permeability was increased.

8. Advantageous Effects of Examples

The dust core in each of these Examples sustained low eddy-current loss and had high strength and high relative permeability.

The present invention is not limited to the embodiment described in detail above and can be variously modified or changed within the scope of the claims of the present invention.

INDUSTRIAL APPLICABILITY

The dust core according to the present invention is particularly suitably applicable to motors, transformers, reactors, inductors, noise filters, and the like.

DESCRIPTION OF REFERENCE NUMERALS

1, 11, 21, 31, 41, 51, 61, 81, 91: dust core
3, 3A, 3B, 3C, 3D: alloy particle
5: core portion
7: coating portion
9, 9A to 9E: metal particle
10, 20, 30: inductor (electronic element)
13, 23, 33, 43, 45, 53, 63, 65, 83, 93: coil
40: noise filter (electronic element)
50: reactor (electronic element)
60: transformer (electronic element)
70: noise filter (electronic device)
80: motor (electric motor)
90: electric generator
L: contour
L1: first portion
L2: second portion

**Claims**

1. A dust core comprising

   a plurality of alloy particles each comprising:

      a core portion made of an alloy containing iron and silicon; and
      a coating portion coating the core portion, wherein

   the coating portion contains $Fe_2SiO_4$ or a solid-solved body of $Fe_2SiO_4$ and $Mg_2SiO_4$,
   a plurality of metal particles each containing silicon in a proportion lower than a proportion of the silicon contained in the alloy is arranged on an outer edge of the coating portion in a scattered manner, and
   at least one of the metal particles is present in a state of being held between the coating portions of adjacent ones of the alloy particles.

2. An alloy particle comprising:

   a core portion made of an alloy containing iron and silicon; and
   a coating portion coating the core portion, wherein
   the coating portion contains $Fe_2SiO_4$ or a solid-solved body of $Fe_2SiO_4$ and $Mg_2SiO_4$, and
   a plurality of metal particles each containing silicon in a proportion lower than a proportion of the silicon contained in the alloy is arranged on an outer edge of the coating portion in a scattered manner.

3. The dust core according to claim 1, wherein

   the coating portion contains the solid-solved body of $Fe_2SiO_4$ and $Mg_2SiO_4$, and
   the solid-solved body has an olivine-type structure.

4. The dust core according to claim 1 or 3, wherein
   the core portion has a component composition containing

   the silicon (Si) in an amount of 2% by mass or higher and 10% by mass or lower,
   aluminum (Al) in an amount of 0% by mass or higher and 10% by mass or lower, and
   chromium (Cr) in an amount of 0% by mass or higher and 20% by mass or lower, with the remainder being the iron and inevitable impurities.

5. The dust core according to claim 4, wherein the component composition is such a composition that $A_3$ transformation from an $\alpha$ phase to a $\gamma$ phase does not occur at 800°C or higher and 1200°C or lower.

6. The alloy particle according to claim 2, wherein

   the coating portion contains the solid-solved body of $Fe_2SiO_4$ and $Mg_2SiO_4$, and
   the solid-solved body has an olivine-type structure.

7. The alloy particle according to claim 2 or 6, wherein
   the core portion has a component composition containing

   the silicon (Si) in an amount of 2% by mass or higher and 10% by mass or lower,
   aluminum (Al) in an amount of 0% by mass or higher and 10% by mass or lower, and
   chromium (Cr) in an amount of 0% by mass or higher and 20% by mass or lower, with the remainder being the iron and inevitable impurities.

8. The alloy particle according to claim 7, wherein the component composition is such a composition that $A_3$ transformation from an $\alpha$ phase to a $\gamma$ phase does not occur at 800°C or higher and 1200°C or lower.

9. An electronic element comprising the dust core according to claim 1 or 3.

10. The electronic element according to claim 9, comprising a coil in addition to the dust core.

11. An electronic device comprising the electronic element according to claim 9.

12. An electric motor comprising the dust core according to claim 1 or 3.

13. An electric generator comprising the dust core according to claim 1 or 3.

# Fig. 1

## Fig. 2

# Fig. 3

# Fig. 4

# Fig. 5

# Fig. 6

# Fig. 7

# Fig. 8

# Fig. 9

# Fig. 10

# Fig. 11

# Fig. 12

## INTERNATIONAL SEARCH REPORT

International application No.

**PCT/JP2023/029024**

### A. CLASSIFICATION OF SUBJECT MATTER

*H01F 1/24*(2006.01)i; *B22F 1/00*(2022.01)i; *B22F 1/16*(2022.01)i; *B22F 1/17*(2022.01)i; *B22F 3/00*(2021.01)i;
*B22F 3/24*(2006.01)i; *C21D 6/00*(2006.01)i; *C22C 33/02*(2006.01)i; *C22C 38/00*(2006.01)i; *H01F 1/147*(2006.01)i;
*H01F 1/33*(2006.01)i; *H01F 3/08*(2006.01)i; *H01F 27/255*(2006.01)i; *H02K 1/02*(2006.01)i
FI:  H01F1/24; B22F1/00 Y; B22F1/16 100; B22F1/17 100; B22F3/00 B; B22F3/24 B; C21D6/00 C; C22C33/02 M;
  C22C38/00 303S; C22C38/00 303T; H01F1/147 166; H01F1/33; H01F3/08; H01F27/255; H02K1/02 A

According to International Patent Classification (IPC) or to both national classification and IPC

### B. FIELDS SEARCHED

Minimum documentation searched (classification system followed by classification symbols)

H01F1/24; B22F1/00; B22F1/16; B22F1/17; B22F3/00; B22F3/24; C21D6/00; C22C33/02; C22C38/00; H01F1/147;
H01F1/33; H01F3/08; H01F27/255; H02K1/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2014-60183 A (AISIN SEIKI CO LTD) 03 April 2014 (2014-04-03) | 1-13 |
| | paragraphs [0035]-[0116], [0155], fig. 1-8 | |
| Y | | 1-13 |
| X | JP 2017-119908 A (DENSO CORP) 06 July 2017 (2017-07-06) | 1-13 |
| | paragraphs [0017]-[0060], fig. 1-5 | |
| Y | | 1-13 |
| X | JP 2005-142241 A (RIKOGAKU SHINKOKAI) 02 June 2005 (2005-06-02) | 1-2, 4-5, 7-13 |
| | paragraphs [0005], [0017]-[0020], [0027]-[0029], [0031]-[0032], [0037]-[0051], fig. 1-5 | |
| Y | | 1-13 |
| A | JP 2006-128307 A (FUJI ELECTRIC HOLDINGS CO LTD) 18 May 2006 (2006-05-18) | 1-13 |
| | paragraphs [0020]-[0021], [0035]-[0038] | |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 October 2023** | **31 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2023/029024** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2019-75566 A (KABUSHIKI KAISHA TOYOTA CHUO KENKYUSHO) 16 May 2019 (2019-05-16)<br>paragraphs [0010]-[0018], [0023]-[0063], fig. 1-3 | 1-13 |

Form PCT/ISA/210 (second sheet) (January 2015)

## INTERNATIONAL SEARCH REPORT
### Information on patent family members

International application No.

**PCT/JP2023/029024**

| Patent document cited in search report | | | Publication date (day/month/year) | Patent family member(s) | | | Publication date (day/month/year) |
|---|---|---|---|---|---|---|---|
| JP | 2014-60183 | A | 03 April 2014 | (Family: none) | | | |
| JP | 2017-119908 | A | 06 July 2017 | US paragraphs [0037]-[0081], fig. 1-5 WO DE | 2019/0006069 2017/110545 112016006051 | A1 A1 T5 | |
| JP | 2005-142241 | A | 02 June 2005 | (Family: none) | | | |
| JP | 2006-128307 | A | 18 May 2006 | (Family: none) | | | |
| JP | 2019-75566 | A | 16 May 2019 | US paragraphs [0013]-[0025], [0033]-[0097], fig. 1-3 WO DE CN SE | 2021/0210258 2019/078257 112018004572 111316385 2050375 | A1 A1 T5 A A1 | |

Form PCT/ISA/210 (patent family annex) (January 2015)

**EP 4 583 129 A1**

**REFERENCES CITED IN THE DESCRIPTION**

**Patent documents cited in the description**

- JP 2019075566 A
- JP 2014060183 A
- JP 2016086124 A
- JP 2019009307 A